# EUROPÄISCHE PATENTSCHRIFT

(11) **EP 2 274 647 B1**
(45) Veröffentlichungstag und Bekanntmachung des Hinweises auf die Patenterteilung: **16.11.2011**
(21) Anmeldenummer: 09737853.3
(22) Anmeldetag: 25.04.2009
(51) Int. Cl.: G02C 5/22

(54) **FEDERSCHARNIER FÜR BRILLEN**
SPRING HINGE FOR SPECTACLES
CHARNIÈRE À RESSORT POUR LUNETTES

(30) Priorität: 30.04.2008 DE 102008022317; 08.05.2008 DE 102008023829
(43) Veröffentlichungstag der Anmeldung: 19.01.2011
(73) Patentinhaber: OBE Ohnmacht & Baumgärtner GmbH & Co. KG, 75228 Ispringen (DE)
(72) Erfinder: WANNENMACHER, Ulrich, 76689 Karlsdorf (DE)
(74) Vertreter: Gleiss, Alf-Olav
(86) Internationale Anmeldenummer: PCT/EP2009/003034
(87) Internationale Veröffentlichungsnummer: WO 2009/132809

(56) Entgegenhaltungen:
- EP-A- 0 426 947
- EP-A- 0 628 846
- EP-A- 0 632 306
- WO-A-01/31386
- WO-A-03/065108
- DE-U1- 9 114 193

## Beschreibung

Die Erfindung betrifft ein Federscharnier für Brillen gemäß Oberbegriff des Anspruchs 1.

Federscharniere der angesprochenen Art sind bekannt. Die europäische Patentschrift EP 0 426 947 B1 spricht ein Federscharnier für Brillen an, das ein Gehäuse, ein Scharnierelement, ein Federelement und einen Sperrkörper aufweist. Zusätzlich ist ein Federkolben vorgesehen, der Kräfte von dem Federelement in den Sperrkörper einleitet, so dass dieser in eine Verschließstellung verlagerbar ist. Das Scharnierelement, der Sperrkörper, der Federkolben und das Federelement können zu einer Baugruppe zusammengesetzt werden, die als Ganzes in das Gehäuse einbringbar ist. Dabei zeigt sich, dass insbesondere das Scharnierelement vergleichsweise kompliziert und massiv gefertigt ist, was einen hohen Herstellungsaufwand bedingt.

Aus der internationalen Patentanmeldung WO 01/31386 A1 geht ein Federscharnier hervor, das ebenfalls ein Gehäuse, ein Federelement, einen Sperrkörper und einen Federkolben aufweist. Das Gehäuse dient hierbei zugleich als Scharnierelement und wird bei einer Auslenkung des Brillenbügels über die Anschlagsposition in der Tragestellung hinaus relativ zu dem Brillenbügel derart verlagert, dass das Federelement komprimiert wird. Der Sperrkörper greift dabei mit einem Rastelement in den Brillenbügel ein, so dass Kräfte in diesen eingeleitet werden, die ihn in die Trageposition zurückdrängen. Um seine Funktion als Scharnierelement erfüllen zu können, muss das Gehäuse in dem Brillenbügel geführt werden. Dazu ist eine, im Längsschnitt gesehen, U-förmige Führungsnut vorgesehen, in die das Gehäuse mit einer Kante eingreift. Nachteilig an dieser Ausgestaltung ist, dass nicht nur ein vergleichsweise kompliziertes Scharnierelement vorgesehen ist, sondern dass auch der Brillenbügel aufwändig bearbeitet werden muss, um die Führungsnut zu erhalten.

Aufgabe der Erfindung ist es, ein Federscharnier für Brillen zu schaffen, das die genanten Nachteile nicht aufweist.

Zur Lösung dieser Aufgabe wird ein Federscharnier für Brillen mit den Merkmalen des Oberbegriffs des Anspruchs 1 vorgeschlagen. Das Federscharnier zeichnet sich dadurch aus, dass das Federelement und der Sperrkörper unmittelbar miteinander gekoppelt sind, und dass das mindestens eine Federelement auf den Sperrkörper eine Vorspannkraft ausübt, aufgrund derer der Sperrkörper aus einer Entriegelungsstellung in eine Verriegelungsstellung verlagerbar ist, in der er mit einer Verriegelungsfläche zusammenwirkt. Durch die unmittelbare Kopplung von Federelement und Sperrkörper kann auf einen Federkolben verzichtet werden. Weiterhin übt das Federelement auf den Sperrkörper ohne jede weitere Maßnahme eine Vorspannkraft aus, durch die der Sperrkörper aus einer Entriegelungsstellung in eine Verriegelungsstellung verlagerbar ist. Auf diese Weise ist eine sehr einfache Verriegelung des Scharniers möglich, wobei zugleich eine hohe Funktionssicherheit gewährleistet ist.

Bevorzugt wird auch ein Federscharnier, das sich dadurch auszeichnet, dass die Kopplung zwischen Federelement und Sperrkörper so ausgelegt ist, dass der Sperrkörper auch in seiner Verriegelungsstellung mit einer Vorspannkraft, insbesondere einem Kippmoment beaufschlagt wird. Dies bedeutet eine weitere Erhöhung der Funktionssicherheit, da größere Kräfte zur Verlagerung des Sperrkörpers aus der Verriegelungsstellung in die Entriegelungsstellung hinaus nötig sind, als dies der Fall wäre, wenn der Sperrkörper in der Verriegelungsstellung nicht mit einer Vorspannkraft beaufschlagt würde.

Es wird auch ein Federscharnier bevorzugt, das sich dadurch auszeichnet, dass ein Kopplungsbereich zwischen dem mindestens einen Federelement und dem Sperrkörper vorgesehen ist, wobei der Kopplungsbereich eine Mittelachse aufweist, die zumindest bei verriegeltem Scharnier einen Winkel mit einer Grundausrichtung des mindestens einen Federelements einschließt. Dies bedeutet, dass zumindest dann, wenn sich der Sperrkörper in seiner Verriegelungsstellung befindet, das Federelement im Bereich seiner Kopplung mit dem Sperrkörper einen Winkel mit seiner Grundausrichtung einschließt, also abgewinkelt ist.

Weiterhin wird ein Federscharnier bevorzugt, bei dem aufgrund des Winkels, den die Mittelachse des Kopplungsbereichs zwischen dem mindestens einen Federelement und dem Sperrkörper mit der Grundausrichtung des mindestens einen Federelements einschließt, Kräfte in den Sperrkörper eingeleitet werden, die diesen in eine Verriegelungsposition drängen. Mit Hilfe dieser Anordnung können auf besonders einfache Weise Vorspannkräfte in den Sperrkörper eingeleitet werden. Durch die Abwinkelung des Federelements im Bereich der Kopplung mit dem Sperrkörper übt dieses Rückstellkräfte auf den Sperrkörper aus, die ihn in eine Verriegelungsposition drängen.

Es wird auch ein Federscharnier bevorzugt, bei dem das Scharnierelement U-förmig ausgebildet ist. Das Scharnierelement kann also eine besonders einfache geometrische Form aufweisen.

Weiterhin wird ein Federscharnier bevorzugt, bei dem das Scharnierelement als Stanzteil gebildet ist. Das Scharnierelement kann also aus einem dünnen Blech bestehen und durch ein sehr einfaches Verfahren erzeugt werden. Dabei wird das Scharnierelement zunächst aus einem dünnen Blech herausgestanzt und dann in seine U-Form gebogen.

Bevorzugt wird auch ein Federscharnier, das sich dadurch auszeichnet, dass das Scharnierelement zwei Scharnierlappen aufweist. In diesem Fall ist an jedem Arm des U-förmigen Scharnierelements je ein Scharnierlappen vorgesehen.

Weitere vorteilhafte Ausgestaltungen ergeben sich aus den Unteransprüchen.

Die Erfindung wird im Folgenden anhand der Zeichnung näher erläutert.

Es zeigen die einzelnen Figuren:
- Figur 1: eine Querschnittsansicht durch ein Federscharnier;
- Figur 2: eine perspektivische Explosionsansicht eines Federscharniers;
- Figur 3A/1: eine perspektivische Ansicht eines ersten Ausführungsbeispiels eines Sperrkörpers;

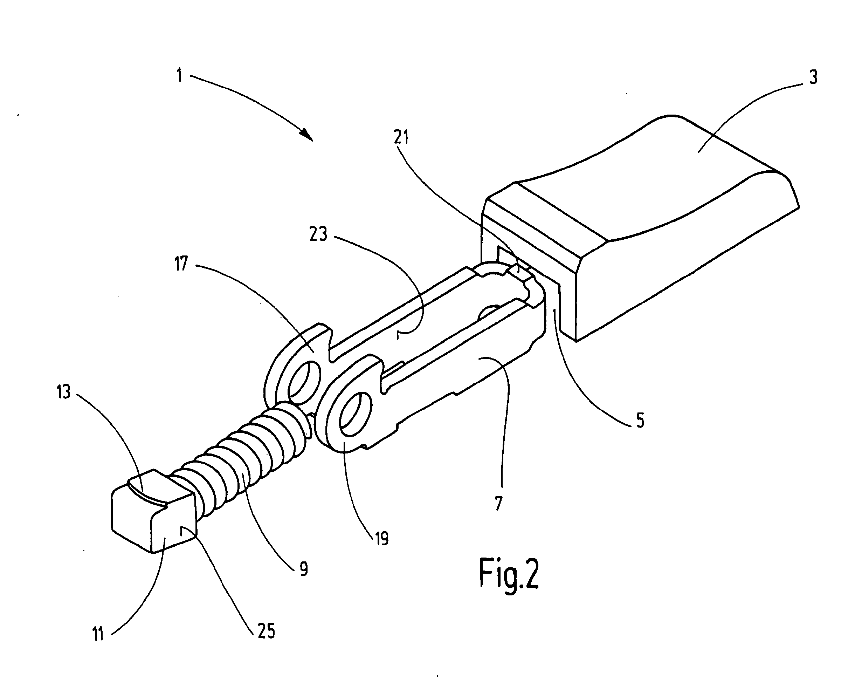

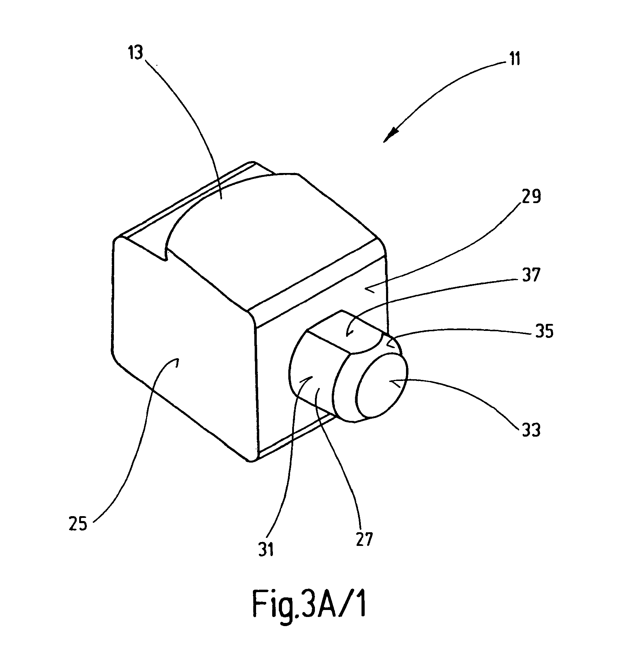

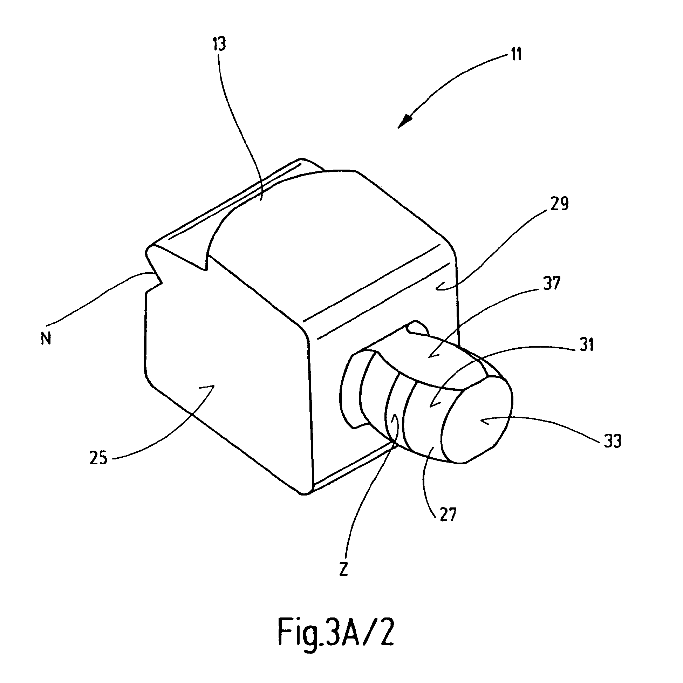

- Figur 3A/2: eine perspektivische Ansicht eines weiteren Ausführungsbeispiels eines Sperrkörpers;

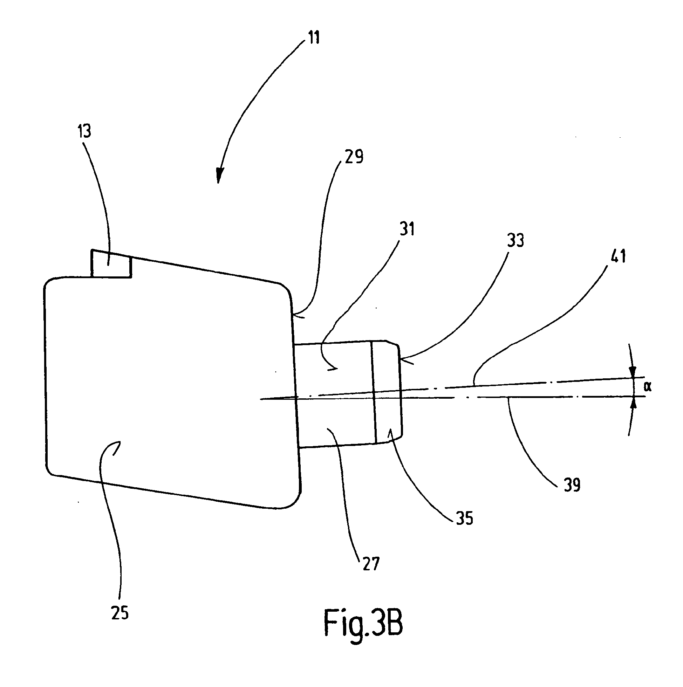

- Figur 3B: eine Seitenansicht des ersten Ausführungsbeispiels eines Sperrkörpers;

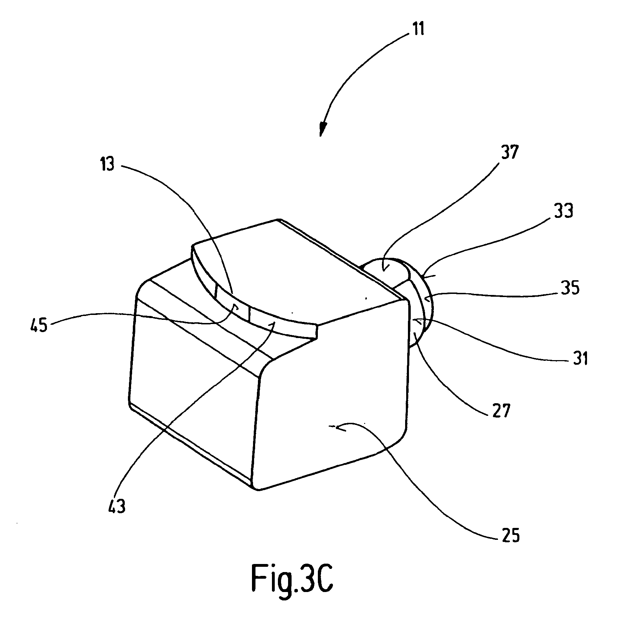

- Figur 3C: eine weitere perspektivische Ansicht des ersten Ausführungsbeispiels eines Sperrkörpers;

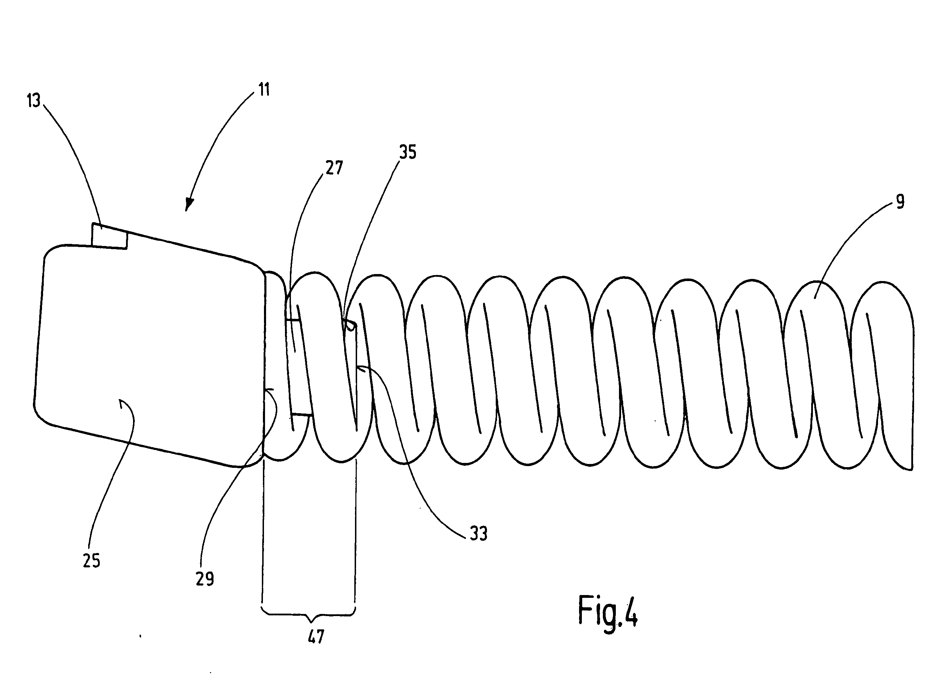

- Figur 4: eine Seitenansicht eines mit einem Federelement gekoppelten Sperrkörpers;

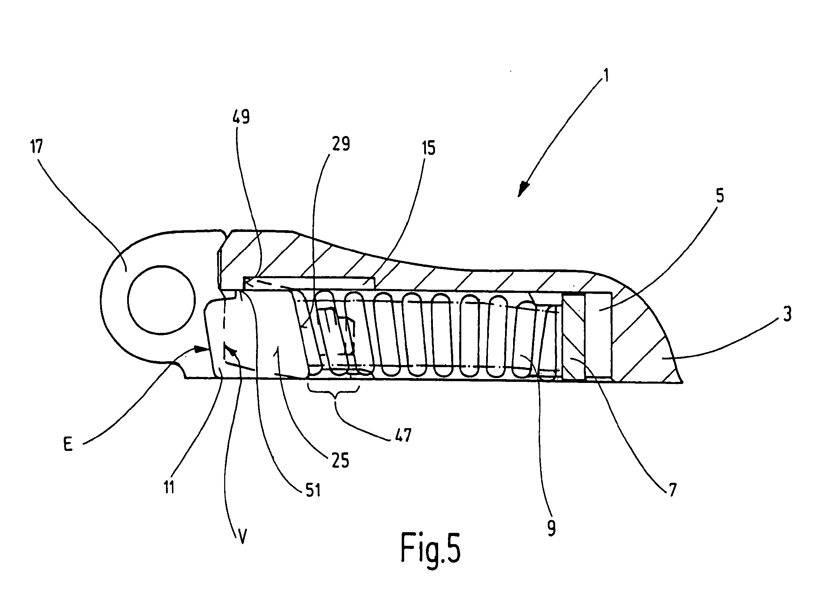

- Figur 5: eine Schnittansicht durch ein Federscharnier, wobei eine Entriegelungsstellung und eine Verriegelungsstellung eines Sperrkörpers gezeigt sind, und

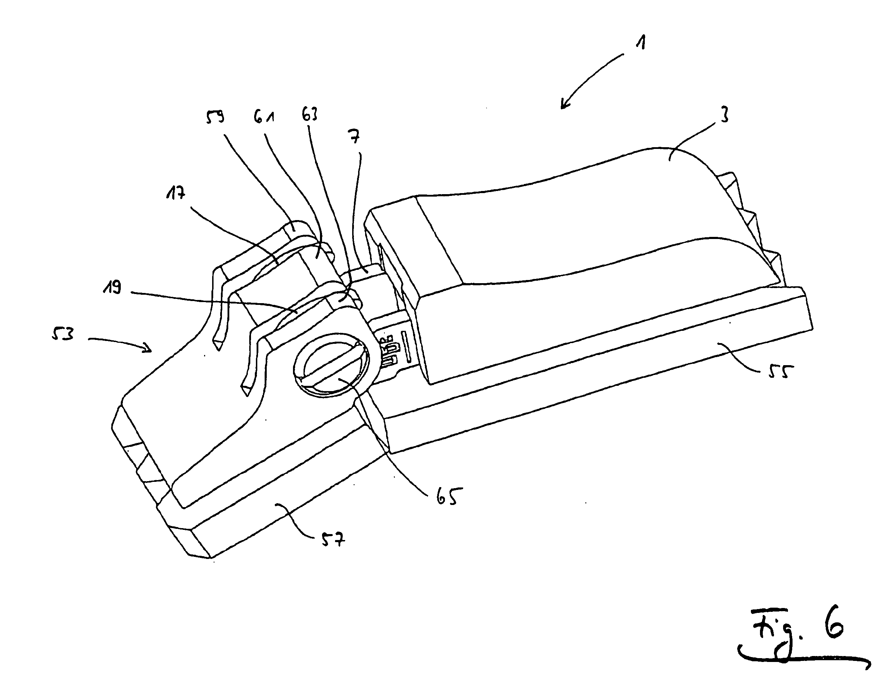

- Figur 6: eine perspektivische Ansicht eines zusammengebauten Federscharniers in Eingriff mit einem weiteren Scharnierteil.

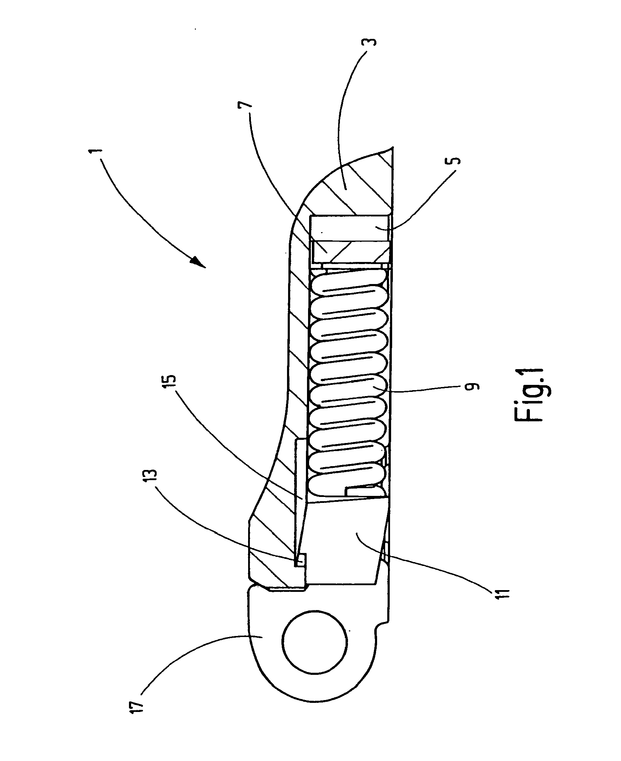

Figur 1 zeigt ein Federscharnier 1. Es umfasst ein Gehäuse 3, das eine Ausnehmung 5 aufweist, die ein Scharnierelement 7, ein Federelement 9 und einen Sperrkörper 11 zumindest teilweise aufnimmt.

Das Federelement 9 ist hier als einzelne Schraubenfeder ausgebildet. Es ist allerdings durchaus möglich, mehr als ein Federelement vorzusehen. Es können zum Beispiel mehrere Federelemente nebeneinander oder hintereinander angeordnet sein. Ebenso gut ist es möglich, zur Erzeugung einer Vorspannkraft auf den Sperrkörper mindestens eine Mäanderfeder vorzusehen. Es können auch sowohl Schraubenfedern als auch Mäanderfedern sowie andersartige Federelemente vorgesehen sein. Wichtig ist lediglich, dass mindestens ein Federelement vorhanden ist, das eine Vorspannkraft in den Sperrkörper einleiten kann.

Der Sperrkörper 11 weist eine Nase 13 auf, die in eine zweite Ausnehmung 15 des Gehäuses 3 eingreift, wenn sich der Sperrkörper 11 in seiner Verriegelungsposition befindet. Das Federelement 9 ist unmittelbar mit dem Sperrkörper 11 gekoppelt, so dass Rückstellbeziehungsweise Vorspannkräfte, die von dem Federelement 9 ausgehen, direkt in den Sperrkörper 11 eingeleitet werden. Auf ein zwischengeschaltetes Übertragungsglied, wie beispielsweise einen Federkolben, kann also verzichtet werden.

Das Scharnierelement umfasst zwei Scharnierlappen, von denen hier nur der vom Betrachter aus gesehen hintere Lappen 17 dargestellt ist. Bei fertig montierter Brille greifen die Lappen des Scharnierelements 7 zwischen korrespondierende Lappen eines hier nicht dargestellten Scharnierteils ein. Dabei ist das hier dargestellte Federscharnier wahlweise an einem Bügel oder einem Mittelteil einer Brille befestigbar. Das korrespondierende Scharnierteil ist dann jeweils an dem anderen Teil der Brille befestigbar.

Figur 2 zeigt eine perspektivische Explosionsansicht eines Federscharniers. Gleiche und funktionsgleiche Teile sind mit gleichen Bezugszeichen versehen, so dass insofern auf die Beschreibung zu Figur 1 verwiesen wird. Deutlich erkennbar ist die U-förmige Gestalt des Scharnierelements 7. Es wird vorzugsweise aus einem Blech gestanzt und in einem zweiten Verfahrensschritt in seine dargestellte U-förmige Gestalt gebogen. Selbstverständlich kann das Scharnierelement 7 auch auf andere Weise, zum Beispiel in einem Spritzgussverfahren oder als Frästeil hergestellt werden. Das Scharnierelement 7 weist zwei Scharnierlappen auf, von denen hier der vom Betrachter aus gesehen hintere Lappen 17 sowie der vordere Lappen 19 dargestellt sind. Außerdem umfasst das Scharnierelement 7 im Bereich seiner Krümmung zwei Abschnitte mit reduzierter Höhe, so dass ein oberer Vorsprung 21 und ein hier nicht dargestellter unterer Vorsprung gebildet werden.

Das Scharnierelement 7, das Federelement 9 sowie der Sperrkörper 11 können zu einer vormontierten Baugruppe zusammengefasst werden. Hierbei kann das Federelement 9 beispielsweise mit dem Scharnierelement 7 verschweißt, verlötet oder verklebt werden. Besonders vorteilhaft ist es, wenn das Federelement 9 an dem oberen Vorsprung 21 und dem unteren Vorsprung des Scharnierelements 7 angeschweißt, angelötet oder angeklebt ist. Hierbei kommt vorzugsweise ein Laserschweißverfahren zur Anwendung. Eine Ausbildung des Scharnierelements 7, des Federelements 9 und des Sperrkörpers 11 als vormontierte Baugruppe wird deshalb bevorzugt, weil bei einer Endmontage einer Brille nicht mehrere kleine und unhandliche Einzelteile in das Gehäuse 3 eingebracht werden müssen, sondern lediglich eine einzige, leicht handhabbare Baugruppe.

Wie man aus der Darstellung erkennen kann, schwimmt bei zusammengebautem Federscharnier der Sperrkörper 11 frei zwischen den Armen des U-förmigen Scharnierelements 7. Bei einer Betätigung des Federscharniers 1 gleiten die inneren Seitenflächen des Scharnierelements 7, von denen hier nur die vom Betrachter aus gesehen hintere Seitenfläche 23 sichtbar ist, an den Seitenflächen des Sperrkörpers 11, von denen hier nur die vom Betrachter aus gesehen vordere Seitenfläche 25 sichtbar ist. Auf diese Weise wird das Scharnierelement 7 von dem Sperrkörper 11 geführt. Weiterhin nimmt der Sperrkörper 11 Kräfte auf, die seitlich in das Scharnierelement 7 eingeleitet werden, so dass dieses nicht zusammengedrückt und damit verformt werden kann.

Im Folgenden wird der Sperrkörper 11 näher erläutert: Figur 3A/1 zeigt eine perspektivische Ansicht eines ersten Ausführungsbeispiels eines Sperrkörpers 11. Gleiche und funktionsgleiche Teile sind mit gleichen Bezugsziffern versehen, so dass insofern auf die vorangegangene Beschreibung verwiesen wird. Der Sperrkörper weist einen Zapfen 27 auf, der von einer Rückenfläche 29 ausgeht. Die Definition einer Hinter- und Vorderseite wurde hierbei so vorgenommen, dass die Nase 13 der Vorderseite des Sperrkörpers 11 zugewandt ist. Der Zapfen 27 dient der Kopplung des Sperrkörpers 11 mit einem Federelement 9.

Zwischen einer hier im Wesentlichen zylindrischen Mantelfläche 31 und einer Stirnfläche 33 des Zapfens 27 ist eine Fase 35 vorgesehen, die es erleichtert, das Federelement 9 über den Zapfen 27 zu schieben, so dass diese miteinander gekoppelt werden. Außerdem weist die Mantelfläche 31 eine in Längsrichtung des Zapfens verlaufende Abflachung 37 auf, die ebenfalls eine Kopplung zwischen Federelement 9 und Zapfen 27 erleichtert.

Figur 3A/2 zeigt eine perspektivische Ansicht eines weiteren Ausführungsbeispiels eines Sperrkörpers. Der Zapfen 27 ist hier tonnenförmig ausgebildet, so dass auch die Mantelfläche 31 entsprechend konturiert ist. Der Zapfen 27 weist an seinem der Rückenfläche 29 zugewandten Ende einen kleineren Durchmesser auf, der entlang der Erstreckung des Zapfens 27 zu einem mittleren Bereich hin zunimmt. In dem mittleren Bereich erreicht der Durchmesser des Zapfens 27 seinen größten Wert, um dann in Richtung der Stirnfläche 33 wieder abzunehmen. Vorzugsweise kann in dem mittleren Bereich ein zylindrischer Abschnitt Z vorgesehen sein, der den größten Durchmesser des Zapfens 27 aufweist. Durch die Tonnenform bietet der Zapfen 27 einem Federelement 9 besseren Halt, da das Federelement 9 im Bereich des größten Durchmessers des Zapfens 27 aufgeweitet wird und sich auf diese Weise zumindest in dem zylindrischen Abschnitt Z fest an die Mantelfläche 31 des Zapfens 27 anlegt. Je nach dem, wie der größte Außendurchmesser des Zapfens 27 relativ zum Innendurchmesser des Federelements 9 gewählt wird, kann der tonnenförmige Zapfen in dem Federelement 9 verkippt werden. Um dies zu vermeiden ist vorgesehen, dass eine dem Sperrkörper 11 zugewandte Stirnseite des Federelements 9 plan an der Rückenfläche 29 anliegt. Im Übrigen ist eine plane Anlage der Stirnseite des Federelements 9 an der Rückenfläche 29 auch in allen anderen Ausführungsbeispielen eines Sperrkörpers 11 vorgesehen, auch wenn dies nicht zwingend erforderlich ist. Zu diesem Zweck ist die Stirnseite des Federelements 9 vorzugsweise geschliffen. Auf diese Weise liegt die dem Sperrkörper 11 zugewandte Stirnseite des Federelements 9 vorzugsweise in einer gedachten Ebene. Dabei liegt sie plan an der Rückenfläche 29 des Sperrkörpers 11 an.

Der Zapfen 27 kann auch in hier nicht dargestellter Weise eine - im Querschnitt gesehen - polygonförmige Mantelfläche 31 aufweisen. Es ergeben sich dann Kanten entlang der Erstreckung des Zapfens 27, die einen besonders guten Halt des Sperrkörpers 11 an dem Federelement 9 bewirken.

Sowohl die tonnenförmige Ausbildung des Zapfens 27 als auch eine - im Querschnitt gesehen - polygonförmige Ausgestaltung der Mantelfläche 31 führen zu einem besseren Halt des Federelements 9 am Zapfen 27. Dies hat den Vorteil, dass das Federelement 9 bei einem Transport des Sperrkörpers 11 nicht verloren gehen kann, wenn dieser mit dem Federelement 9 verbunden ist. Umgekehrt kann bei einer vormontierten Baugruppe, die aus dem Scharnierelement 7, dem Federelement 9 und dem Sperrkörper 11 besteht, der Sperrkörper 11 nicht verloren gehen, wenn er sicher mit dem Federelement 9 verbunden ist.

Der Zapfen 27 ist hier beispielhaft als Kopplungsmittel zwischen dem Federelement 9 und dem Sperrkörper 11 angesprochen. Ebenso ist es möglich, eine Ausnehmung in dem Sperrkörper 11 vorzusehen, in die das Federelement teilweise einbringbar ist. Auch wäre eine magnetische Kopplung möglich.

Auf der der Rückenfläche 29 gegenüber liegenden Seite weist das hier dargestellte Ausführungsbeispiels eines Sperrkörpers 11 eine Nut auf, die als Entriegelungsnut N dient. Bei verriegeltem Federscharnier 1 ist es möglich, mit einem Werkzeug, beispielsweise einem Schraubendreher, in die Entriegelungsnut N einzugreifen und so den Sperrkörper 11 aus seiner Verriegelungsstellung in eine Entriegelungsstellung zu verlagern. Die Entriegelungsnut N ist kerbenförmig ausgebildet, es sind aber auch andere Querschnittsformen wie beispielsweise ein halbkreisförmiger Querschnitt möglich. Wesentlich ist nur, dass an der der Rückenfläche 29 gegenüber liegenden Seite des Sperrkörpers 11 eine Vertiefung ausgebildet ist, in die ein Werkzeug eingreifen kann, um den Sperrkörper 11 zu entriegeln. Figur 3B zeigt eine Seitenansicht des ersten Ausführungsbeispiels des Sperrkörpers 11. Gleiche und funktionsgleiche Elemente sind mit gleichen Bezugszeichen versehen, so dass insofern auf die vorangegangene Beschreibung verwiesen wird. Der Sperrkörper 11 ist hier in einer Position dargestellt, die er in seiner Verriegelungsstellung einnimmt. Die gedachte horizontale Achse 39 definiert also eine Mittelachse des Gehäuses bei verriegeltem Federscharnier 1 und damit eine Grundausrichtung, die das Federelement 9 in diesem Zustand aufweist. Eine gedachte Achse 41 steht hier beispielhaft senkrecht auf der Rückenfläche 29 des Sperrkörpers 11; sie stellt eine Mittelachse des Zapfens 27 dar. Deutlich erkennbar ist, dass die Achse 41 und die Achse 39 miteinander einen Winkel α einschließen. Es zeigt sich also, dass die Rückenfläche 29 hier mit einer gedachten Ebene, die senkrecht auf der Grundausrichtung des Federelements steht, ebenfalls den Winkel α einschließt. Weiterhin schließt die Mittelachse des Zapfens 27 mit der Grundausrichtung des Federelements 9 den Winkel α ein. Der Winkel α kann beispielhaft 0° bis 6°, vorzugsweise 2° bis 4° und in besonders bevorzugter Weise 3° betragen.

Ist statt des Zapfens 27 eine Ausnehmung in dem Sperrkörper 11 vorgesehen, die das Federelement 9 teilweise aufnimmt, so ist nach Allem klar, dass eine Mittelachse dieser Ausnehmung mit der gedachten Achse 41 zusammenfallen muss. In diesem Fall weist auch die Mittelachse der Ausnehmung mit der Grundausrichtung des Federelements 9 einen Winkel auf. Ist eine magnetische Kopplung zwischen Sperrkörper 11 und Federelement 9 vorgesehen, so müssen die auftretenden magnetischen Kräfte hinreichend groß sein, damit das dem Sperrkörper 11 zugewandte Ende des Federelements 9 plan an der verkippten Rückenfläche 29 anliegt. In diesem Fall schließt also der Normalenvektor der Rückenfläche 29 und der dem Sperrkörper 11 zugewandte Teil des Federelements 9 einen Winkel mit der Grundausrichtung des Federelements 9 ein.

Figur 3C zeigt eine weitere perspektivische Ansicht des ersten Ausführungsbeispiels des Sperrkörpers 11. Gleiche und funktionsgleiche Teile sind mit gleichen Bezugsziffern versehen, so das insofern auf die vorangegangene Beschreibung verwiesen werden kann. Deutlich erkennbar ist, dass die Nase 13 des Sperrkörpers 11 kreisbogenförmig ausgebildet ist. Eine zylinderabschnittsförmige Mantelfläche 43 der Nase 13 weist eine Abflachung 45 auf, die als Anlagefläche dient. Hiermit liegt der Sperrkörper 11 in seiner Verriegelungsstellung an einer Auflagefläche an, die als Verriegelungsfläche dient und in der zweiten Ausnehmung 15 des Gehäuses 3 gebildet ist.

Der Sperrkörper 11 kann im Übrigen auf sehr einfache Weise in einem Metallpulverspritzgussverfahren hergestellt werden. Selbstverständlich sind auch andere Herstellungsarten, wie zum Beispiel eine Bearbeitung aus dem Vollen, denkbar. In einem Metallpulverspritzgussverfahren kann der Sperrkörper 11 allerdings auf sehr materialsparende und einfache Weise hergestellt werden.

Figur 4 zeigt die Kopplung zwischen dem Federelement 9 und dem Sperrkörper 11. Gleiche und funktionsgleiche Teile sind mit gleichen Bezugszeichen versehen, so das insofern auf die vorangegangene Beschreibung verwiesen wird. Das Federelement 9 ist über den Zapfen 27 des Sperrkörpers 11 geschoben, so dass sich eine unmittelbare Kopplung ergibt. Deutlich erkennbar ist ein Kopplungsbereich 47 zwischen dem Federelement 9 und dem Sperrkörper 11. Die dargestellten Elemente befinden sich außerhalb des Gehäuses 3, so dass der Zapfen 27 aufgrund der Rückstellkräfte des Federelements 9 hier parallel zu dessen Grundausrichtung orientiert ist, also mit dem Federelement fluchtet. Damit steht hier auch die Rückenfläche 29 des Sperrkörpers 11 senkrecht auf der Grundausrichtung des Federelements 9. Dieses wird aufgrund seiner Federeigenschaften stets versuchen, entlang seiner gesamten Erstreckung parallel zu seiner Grundausrichtung ausgerichtet zu sein. Es versteht sich von selbst, dass wenn die Kopplung zwischen dem Federelement 9 und dem Sperrkörper 11 durch eine Ausnehmung bewirkt würde, in die das Federelement 11 teilweise eingreift, auch eine Mittelachse der Ausnehmung hier parallel zur Grundausrichtung des Federelements 9 orientiert wäre. Ebenso läge im Fall einer magnetischen Kopplung die Rückenfläche 29 senkrecht zur Grundausrichtung des Federelements 9.

Figur 5 zeigt eine Schnittansicht durch ein Federscharnier 1. Gleiche und funktionsgleiche Teile sind mit gleichen Bezugszeichen versehen, so dass insofern auf die vorangegangene Beschreibung verwiesen wird. Der Sperrkörper 11 ist in zwei verschiedenen Positionen dargestellt: Mit durchgezogener Umrandungslinie in seiner Entriegelungsstellung E und mit strichlierter Linie in seiner Verriegelungsstellung V. Es wird deutlich, dass in der Verriegelungsposition die Abflachung 45 der Nase 13 des Sperrkörpers 11 an einer Anlagefläche, die in der zweiten Ausnehmung 15 des Gehäuses 3 gebildet ist und als Verriegelungsfläche 49 dient, anliegt, und so eine Verriegelung des Federscharniers 1 bewirkt.

Das Gehäuse 3 liegt auf einem nicht dargestellten Boden auf, der entweder durch einen Brillenbügel oder durch ein Mittelteil einer Brille gebildet wird. Dieser Boden schließt das Gehäuse 3 unten ab. Werden das Scharnierelement 7, das Federelement 9 sowie der Sperrkörper 11 beispielsweise als vormontiere Baugruppe in das Gehäuse 3 eingebracht, so muss die Nase 13 des Sperrkörpers 11 an einer oberen Wandung 51 des Gehäuses 3 vorbeigeführt werden. Hierdurch wird der Sperrkörper 11 um eine Achse verkippt, die senkrecht auf der Seitenfläche 25 des Sperrkörpers 11 steht. Die Mittelachse des Zapfens 27 schließt also in dieser Entriegelungsstellung einen Winkel mit der Grundausrichtung des Federelements 9 ein, der vorzugsweise größer ist als der Winkel α, den beide in einer Verriegelungsposition einschließen. Durch die so bewirkte Deformation des Federelements 9 werden über den Zapfen 27 Vorspannkräfte von dem Federelement 9 in den Sperrkörper 11 eingeleitet, aufgrund derer der Sperrkörper 11 aus der Entriegelungsstellung in eine Verriegelungsstellung verlagerbar, hier kippbar ist. Es versteht sich von selbst, dass der gleiche Effekt erzielt würde, wenn die Kopplung zwischen Federelement 9 und Sperrkörper 11 durch eine in dem Sperrkörper 11 vorgesehene Ausnehmung erreicht würde, in die das Federelement 9 teilweise eingreift. Derselbe Effekt kann auch mit einer magnetischen Kopplung zwischen Federelement 9 und Sperrkörper 11 erzielt werden, sofern die magnetischen Kräfte groß genug sind, die dem Sperrkörper 11 zugewandte Stirnseite des Federelements 9 in einer zur Rückenfläche 29 parallelen Orientierung zu halten.

Vorzugsweise ist vorgesehen, dass das Federelement 9 mit seiner dem Sperrkörper 11 zugewandten Stirnseite an der Rückenfläche 29 plan anliegt. Hierzu kann die Stirnseite des Federelements 9 geschliffen sein, so dass sie vorzugsweise in einer gedachten Ebene liegt.

In dem dargestellten Ausführungsbeispiel schließt die Mittelachse des Zapfens 27 auch dann einen Winkel α mit der Grundausrichtung des Federelements 9 ein, wenn sich der Sperrkörper 11 in seiner Verriegelungsstellung befindet. Durch die damit verbundene Deformation des Federelements 9 im Kopplungsbereich 47 wird der Sperrkörper 11 auch in seiner Verriegelungsstellung mit einer Vorspannkraft, hier mit einem Kippmoment, beaufschlagt, das ihn sicher in der Verriegelungsstellung hält.

Es wird auch klar, dass der Kopplungsbereich 47 zwischen Federelement 9 und Sperrkörper 11 eine Mittelachse aufweist, die bei diesem Ausführungsbeispiel sowohl in der Entriegelungsstellung als auch in der Verriegelungsstellung des Sperrkörpers 11 einen Winkel mit der Grundausrichtung des Federelements 9 einschließt.

Aus dem zuvor Gesagten wird deutlich, dass in dem dargestellten Ausführungsbeispiel aufgrund des Winkels, den die Mittelachse des Kopplungsbereichs zwischen dem Federelement 9 und dem Sperrkörper 11 mit der Grundausrichtung des Federelements 9 einschließt, Kräfte in den Sperrkörper 11 eingeleitet werden, die diesen in eine Verriegelungsposition drängen. Vorzugsweise wird der Sperrkörper 11 nicht nur in die Verriegelungsstellung gedrängt, sondern zusätzlich mit einer Kraft beaufschlagt, die ihn sicher in dieser Position hält. Eine ungewollte Entriegelung wird damit sehr sicher vermieden.

Es ist allerdings auch möglich, dass das Federelement 9 auf den Sperrkörper 11 eine Vorspannkraft ausübt, aufgrund derer der Sperrkörper 11 aus einer Entriegelungsstellung in eine Verriegelungsstellung verlagerbar ist, ohne dass ein Winkel α im Kopplungsbereich 47 vorgesehen ist. Beispielsweise kann vorgesehen sein, dass die Mittelachse des Kopplungsbereichs 47 keinen Winkel mit der Grundausrichtung des Federelements 9 einschließt, wenn sich der Sperrkörper 11 in seiner Verriegelungsstellung befindet. In diesem Fall würde der Kopplungsbereich 47 immer einen Winkel mit der Grundausrichtung des Federelements 9 einschließen, wenn der Sperrkörper 11 in seine Entriegelungsstellung gedrängt würde, beispielsweise um eine Achse senkrecht zur Seitenfläche 25 verkippt wäre. Auf diese Weise würde der Sperrkörper 11 zwar von seiner Entriegelungsstellung in seine Verriegelungsstellung gedrängt, wäre aber in der Verriegelungsstellung frei von Vorspannkräften, insbesondere von Kippmomenten. Da das Federelement 9 selbst bei vollständig in das Gehäuse 3 eingebrachtem Scharnierelement 7 eine Vorspannung entlang seiner Längsausdehnung aufweist, würde der Sperrkörper 11 auch in diesem Fall mit der Abflachung 45 gegen die Verriegelungsfläche 49 gedrückt. Auch so wäre also eine hinreichend sichere Verriegelung des Federscharniers 1 gewährleistet. Auch wenn die Mittelachse des Kopplungsbereichs 47 keinen Winkel mit der Grundausrichtung des Federelements 9 einschließt, wenn sich der Sperrkörper 11 in seiner Verriegelungsstellung befindet, können Kräfte in den Sperrkörper eingeleitet werden, die diesen sicher in seiner Verriegelungsstellung halten. Hierzu kann vorgesehen sein, dass die dem Sperrkörper 11 zugewandte Stirnseite des Federelements 9 einen Winkel mit dessen Grundausrichtung einschließt. Bei vorgespanntem Federelement 9 ergibt sich so eine asymmetrische Kraft auf die Rückenfläche 29 des Sperrkörpers 11, so dass ein Kippmoment resultiert, das den Sperrkörper 11 - bei richtiger relativer Orientierung des Federelements 9 zum Sperrkörper 11 - von seiner Entriegelungsstellung in seine Verriegelungsstellung drängt und dort sicher hält.

In den Figuren wurde davon ausgegangen, dass die Verriegelungsfläche 49 am Gehäuse 3 ausgebildet ist. Es ist aber sehr wohl auch möglich, die Verriegelungsfläche an dem Brillenteil vorzusehen, auf welches das Federscharnier aufgebracht ist.

Figur 6 zeigt eine perspektivische Ansicht des Federscharniers 1, das mit einem Scharnierteil 53 in Eingriff ist. Gleiche und funktionsgleiche Elemente sind mit gleichen Bezugszeichen versehen, so dass insofern auf die vorangegangene Beschreibung verwiesen wird. Das Federscharnier 1 ist auf einem Brillenelement 55 angeordnet, das ein Bügel oder Mitteilteil einer Brille sein kann. Das Brillenelement 55 ist der Einfachheit halber rechts oben abgebrochen dargestellt.

Das Scharnierteil 53 ist auf einem Brillenelement 57 angeordnet. Dieses ist zur Vereinfachung links unten abgebrochen dargestellt. Ist das Federscharnier 1 auf einem Brillenelement 55 angeordnet, welches als Brillenbügel ausgebildet ist, wird bevorzugt das Scharnierteil 53 auf einem als Mitteilteil einer Brille ausgebildeten Brillenelement 57 angeordnet. Umgekehrt ist das Scharnierteil 53 vorzugsweise auf einem als Brillenbügel ausgebildeten Brillenelement 57 angeordnet, wenn das Federscharnier 1 auf einem Brillenelement 55 angeordnet ist, das als Mittelteil einer Brille ausgebildet ist.

Das Federscharnier 1 kann vorzugsweise mit dem Gehäuse 3 auf dem Brillenelement 55 befestigt werden. Das Gehäuse 3 kann hierzu bevorzugt auf das Brillenelement 55 gelötet, geschweißt, lasergeschweißt, punktgeschweißt, geklebt oder in anderer geeigneter Weise befestigt werden. Bevorzugt wird, wenn auch das Scharnierteil 53 mit Hilfe eines der genannten Verfahren oder mittels eines anderen, geeigneten Verfahrens an dem Brillenelement 57 befestigt wird.

Erkennbar ist, dass die Lappen 17, 19 des Scharnierelements 7 zwischen korrespondierende Lappen 59, 61 und 63 des Scharnierteils 53 eingreifen. Sowohl die Lappen 17, 19 des Scharnierelements 7 als auch die Lappen 59, 61 und 63 des Scharnierteils 53 weisen jeweils ein Scharnierauge auf, wobei die Scharnieraugen in Figur 6 miteinander fluchtend angeordnet sind. Ein Kopplungselement 65, das vorzugsweise als Schraube ausgebildet ist, durchsetzt in an sich bekannter Weise die Scharnieraugen und schafft so eine gelenkige Verbindung zwischen dem Federscharnier 1 und dem Scharnierteil 53.

Figur 6 zeigt die aus dem Federscharnier 1 und dem Scharnierteil 53 bestehende Scharnieranordnung in einer Stellung, in der ein Brillenbügel über die Anschlagsposition in der Tragestellung hinaus derart verlagert ist, dass das Federelement 9 komprimiert wird. Dieses leitet hier also eine Rückstellkraft in die Scharnieranordnung ein, die letztendlich den Brillenbügel in seine Tragestellung zurückdrängt.

Nach allem zeigt sich, dass das vorgeschlagene Federscharnier eine konstruktiv sehr einfache und gleichzeitig funktionssichere Ausgestaltung aufweist. Auf zusätzliche Elemente wie Übertragungsglieder beziehungsweise Federkolben kann hier verzichtet werden. Außerdem ist vorzugsweise vorgesehen, dass das Scharnierelement 7, das Federelement 9 und der Sperrkörper 11 zu einer vormontierten Baugruppe zusammengefasst werden, die auf einfache Weise in das Gehäuse 3 eingebracht werden kann. Das Scharnierelement 7 ist dabei vorzugsweise als einfaches Stanzeil ausgeführt, so dass es einfacher und kostengünstiger als in bekannten Federscharnieren herstellbar ist. Der Sperrkörper ist auf einfache Weise mit Hilfe eines Werkzeugs aus seiner Verriegelungsstellung in eine Entriegelungsstellung kippbar, so dass das Federscharnier 1 ohne weiteres demontierbar ist, um beispielsweise eine Wartung, Reinigung, oder einen Austausch defekter Teile vornehmen zu können.

## Patentansprüche

1. Federscharnier für Brillen, das Federscharnier umfassend:
- ein Gehäuse (3),
- ein Scharnierelement (7),
- mindestens ein Federelement (9),
- einen Sperrkörper (11),
wobei das Gehäuse (3) eine Ausnehmung (5) aufweist, welche das Scharnierelement (7), das mindestens eine Federelement (9), und
den Sperrkörper (11) zumindest teilweise aufnimmt, **dadurch gekennzeichnet, dass** das Federelement (9) und der Sperrkörper (11) unmittelbar miteinander gekoppelt sind, und dass das mindestens eine Federelement (9) auf den Sperrkörper (11) eine Vorspannkraft ausübt, aufgrund derer der Sperrkörper (11) aus einer Entriegelungsstellung in eine Verriegelungsstellung verlagerbar ist, in der er mit einer Verriegelungsfläche (49) am Gehäuse (3) zusammenwirkt.

2. Federscharnier nach Anspruch 1, **dadurch gekennzeichnet, dass** die Kopplung so ausgelegt ist, dass der Sperrkörper (11) auch in der Verriegelungsstellung mit einer Vorspannkraft beaufschlagt wird.

3. Federscharnier nach Anspruch 1 oder 2, **dadurch gekennzeichnet, dass** ein Kopplungsbereich (47) zwischen dem mindestens einen Federelement (9) und dem Sperrkörper (11) vorgesehen ist, der eine Mittelachse aufweist, die zumindest bei verriegeltem Scharnier (1) einen Winkel mit einer Grundausrichtung des mindestens einen Federelements (9) einschließt.

4. Federscharnier nach Anspruch 3, **dadurch gekennzeichnet, dass** auf Grund des Winkels, den die Mittelachse des Kopplungsbereichs (47) zwischen dem mindestens einen Federelement (9) und dem Sperrkörper (11) mit der Grundausrichtung des mindestens einen Federelement (9) einschließt, Kräfte in den Sperrkörper (11) eingeleitet werden, die diesen in eine Verriegelungsposition drängen.

5. Federscharnier nach einem der vorhergehenden Ansprüche, **dadurch gekennzeichnet, dass** das Scharnierelement (7) U-förmig ausgebildet ist.

6. Federscharnier nach einem der vorhergehenden Ansprüche, **dadurch gekennzeichnet, dass** das Scharnierelement (7) als Stanzteil gebildet ist.

7. Federscharnier nach einem der vorhergehenden Ansprüche, **dadurch gekennzeichnet, dass** das Scharnierelement (7) zwei Scharnierlappen (17,19) aufweist.

8. Federscharnier nach einem der vorhergehenden Ansprüche, **dadurch gekennzeichnet, dass** das Scharnierelement (7) mindestens einen Vorsprung (21) aufweist.

9. Federscharnier nach einem der vorhergehenden Ansprüche, **dadurch gekennzeichnet, dass** das mindestens eine Federelement (9) als Schraubenfeder ausgebildet ist.

10. Federscharnier nach einem der vorhergehenden Ansprüche, **dadurch gekennzeichnet, dass** das mindestens eine Federelement als Mäanderfeder ausgebildet ist.

11. Federscharnier nach einem der vorhergehenden Ansprüche, **dadurch gekennzeichnet, dass** zumindest eine dem Sperrkörper (11) zugewandte Stirnseite des Federelements (9) geschliffen ist und vorzugsweise in einer gedachten Ebene liegt.

12. Federscharnier nach einem der vorhergehenden Ansprüche, **dadurch gekennzeichnet, dass** der Sperrkörper (11) mindestens einen Zapfen (27) zur Kopplung mit dem mindestens einen Federelement (9) aufweist.

13. Federscharnier nach Anspruch 12, **dadurch gekennzeichnet, dass** die Mantelfläche (31) des Zapfens (27) zylinderförmig, polygonförmig oder tonnenförmig ausgebildet ist.

14. Federscharnier nach einem der vorhergehenden Ansprüche, **dadurch gekennzeichnet, dass** der Sperrkörper (11) mindestens eine Ausnehmung zur Kopplung mit dem mindestens einen Federelement (9) aufweist.

15. Federscharnier nach einem der vorhergehenden Ansprüche, **dadurch gekennzeichnet, dass** der Zapfen (27) und/oder die Ausnehmung eine Mittelachse aufweisen, die bei verriegeltem Scharnier einen Winkel von 0° bis 6°, vorzugsweise 2° bis 4°, vorzugsweise 3° mit der Grundausrichtung des mindestens einen Federelements (9) einschließt.

16. Federscharnier nach einem der vorhergehenden Ansprüche, **dadurch gekennzeichnet, dass** der Sperrkörper (11) frei zwischen den Armen des Scharnierelements (7) schwimmt.

17. Federscharnier nach einem der vorhergehenden Ansprüche, **dadurch gekennzeichnet, dass** der Sperrkörper (11) eine kreisbogenförmige Nase (13) aufweist.

18. Federscharnier nach einem der vorhergehenden Ansprüche, **dadurch gekennzeichnet, dass** der Sperrkörper (11) in einem Metallpulverspritzgußverfahren herstellbar ist.

19. Federscharnier nach einem der vorhergehenden Ansprüche, **dadurch gekennzeichnet, dass** das Scharnierelement (7), das mindestens eine Federelement (9) und der Sperrkörper (11) eine vormontierbare Baugruppe bilden.

20. Federscharnier nach einem der vorhergehenden Ansprüche, **dadurch gekennzeichnet, dass** das mindestens eine Federelement (9) an dem Scharnierelement (7) angeschweißt, angelötet oder angeklebt ist.

21. Federscharnier nach Anspruch 20, **dadurch gekennzeichnet, dass** das mindestens eine Federelement (9) an dem mindestens einen Vorsprung (21) des Scharnierelements (7) angeschweißt, angelötet oder angeklebt ist.

## Claims

1. A spring hinge for spectacles, comprising:
- a housing (3)
- a hinge element (7)
- at least one spring element (9)
- a blocking body (11),
wherein the housing (3) has a recess (5) which at least partially accommodates the hinge element (7), the at least one spring element (9), and the blocking body (11), **characterized in that** the spring element (9) and the blocking body (11) are coupled directly to one another and that the at least one spring element (9) subjects the blocking body (11) to a prestress force due to which the blocking body (11) can be displaced out of an unlocking position into a locking position in which it interacts with a locking surface (49) on the housing (3).

2. The spring hinge according to claim 1, **characterized in that** the coupling is designed in such a manner that the blocking body (11) is subjected to a prestress force also in the locking position.

3. The spring hinge according to claim 1 or claim 2, **characterized in that** between the at least one spring element (9) and the blocking body (11), a coupling area (47) is provided which has a center axis which, at least when the hinge (1) is locked, encloses an angle with a basic alignment of the at least one spring element (9).

4. The spring hinge according to claim 3, **characterized in that** due to the angle which the center axis of the coupling area (47) between the at least one spring element (9) and the blocking body (11) encloses with the basic alignment of the at least one spring element (9), forces are transmitted into the blocking body (11) which forces push the same into a locking position.

5. The spring hinge according to any one of the preceding claims, **characterized in that** the hinge element (7) is U-shaped.

6. The spring hinge according to any one of the preceding claims, **characterized in that** the hinge element (7) is formed as stamping part.

7. The spring hinge according to any one of the preceding claims, **characterized in that** the hinge element (7) has two hinge leaves (17, 19).

8. The spring hinge according to any one of the preceding claims, **characterized in that** the hinge element (7) has at least one projection (21).

9. The spring hinge according to any one of the preceding claims, **characterized in that** the at least one spring element (9) is configured as helical spring.

10. The spring hinge according to any one of the preceding claims, **characterized in that** the at least one spring element is configured as meander spring.

11. The spring hinge according to any one of the preceding claims, **characterized in that** at least one front side of the spring element (9) facing the blocking body (11) is ground and preferably lies in an imaginary plane.

12. The spring hinge according to any one of the preceding claims, **characterized in that** the blocking body (11) has at least one pin (27) for coupling with the at least one spring element (9).

13. The spring hinge according to claim 12, **characterized in that** the outer surface (31) of the pin (27) is cylindrical, polygon-shaped or barrel-shaped.

14. The spring hinge according to any one of the preceding claims, **characterized in that** the blocking body (11) has at least one recess for coupling with the at least one spring element (9).

15. The spring hinge according to any one of the preceding claims, **characterized in that** the pin (27) and/or the recess have a center axis which, when the hinge is locked, encloses an angle from 0° to 6°, preferably 2° to 4°, preferably 3° with the basic alignment of the at least one spring element (9).

16. The spring hinge according to any one of the preceding claims, **characterized in that** the blocking body (11) floats freely between the arms of the hinge element (7).

17. The spring hinge according to any one of the preceding claims, **characterized in that** the blocking body (11) has a nose (13) with the shape of a circular arc.

18. The spring hinge according to any one of the preceding claims, **characterized in that** the blocking body (11) can be produced with a metal powder injection molding method.

19. The spring hinge according to any one of the preceding claims, **characterized in that** the hinge element (7), the at least one spring element (9) and the blocking body (11) form a unit that can be pre-assembled.

20. The spring hinge according to any one of the preceding claims, **characterized in that** the at least one spring element (9) is welded, soldered, or adhered to the hinge element (7).

21. The spring hinge according to claim 20, **characterized in that** the at least one spring element (9) is welded, soldered, or adhered to the at least one projection (21) of the hinge element (7).

## Revendications

1. Charnière à ressort pour lunettes, la charnière à ressort comprenant :
- un logement (3),
- un élément de charnière (7),
- au moins un élément de ressort (9),
- un corps de blocage (11),
dans laquelle le logement (3) présente un évidement (5) qui reçoit au moins partiellement l'élément de charnière (7), l'au moins un élément de ressort (9) et le corps de blocage (11), **caractérisée en ce que** l'élément de ressort (9) et le corps de blocage (11) sont raccordés directement l'un à l'autre, et que l'au moins un élément de ressort (9) exerce une force de précontrainte sur le corps de blocage (11) en raison de laquelle le corps de blocage (11) peut être déplacé d'une position de déverrouillage dans une position de verrouillage, dans laquelle il coopère avec une surface de verrouillage (49) sur le logement (3).

2. Charnière à ressort selon la revendication 1, **caractérisée en ce que** le raccordement est conçu de sorte que le corps de blocage (11) est également sollicité avec une force de précontrainte dans la position de verrouillage.

3. Charnière à ressort selon la revendication 1 ou 2, **caractérisée en ce qu'**il est prévu une région de raccordement (47) entre l'au moins un élément de ressort (9) et le corps de blocage (11) qui présente un axe médian qui inclut un angle avec une orientation de base de l'au moins un élément de ressort (9) au moins en cas de charnière verrouillée (1).

4. Charnière à ressort selon la revendication 3, **caractérisée en ce que** des forces sont introduites dans le corps de blocage (11), lesquelles poussent celui-ci dans une position de verrouillage, en raison de l'angle qu'inclut l'axe médian de la région de raccordement (47) entre l'au moins un élément de ressort (9) et le corps de blocage (11) avec l'orientation de base de l'au moins un élément de ressort (9).

5. Charnière à ressort selon l'une quelconque des revendications précédentes, **caractérisée en ce que** l'élément de charnière (7) est réalisé en forme de U.

6. Charnière à ressort selon l'une quelconque des revendications précédentes, **caractérisée en ce que** l'élément de charnière (7) est formé en tant que pièce découpée.

7. Charnière à ressort selon l'une quelconque des revendications précédentes, **caractérisée en ce que** l'élément de charnière (7) présente deux pattes de charnière (17, 19).

8. Charnière à ressort selon l'une quelconque des revendications précédentes, **caractérisée en ce que** l'élément de charnière (7) présente au moins une saillie (21).

9. Charnière à ressort selon l'une quelconque des revendications précédentes, **caractérisée en ce que** l'au moins un élément de ressort (9) est réalisé en tant que ressort hélicoïdal.

10. Charnière à ressort selon l'une quelconque des revendications précédentes, **caractérisée en ce que** l'au moins un élément de ressort est réalisé en tant que ressort à méandre.

11. Charnière à ressort selon l'une quelconque des revendications précédentes, **caractérisée en ce qu'**au moins un côté frontal de l'élément de ressort (9) tourné vers le corps de blocage (11) est poli et se situe de préférence dans un plan imaginaire.

12. Charnière à ressort selon l'une quelconque des revendications précédentes, **caractérisée en ce que** le corps de blocage (11) présente au moins un tourillon (27) pour le raccordement à l'au moins un élément de ressort (9).

13. Charnière à ressort selon la revendication 12, **caractérisée en ce que** la surface d'enveloppe (31) du tourillon (27) est réalisée en forme de cylindre, de polygone ou de tonneau.

14. Charnière à ressort selon l'une quelconque des revendications précédentes, **caractérisée en ce que** le corps de blocage (11) présente au moins un évidement pour le raccordement à l'au moins un élément de ressort (9).

15. Charnière à ressort selon l'une quelconque des revendications précédentes, **caractérisée en ce que** le tourillon (27) et/ou l'évidement présentent un axe médian qui inclut un angle de 0° à 6°, de préférence 2° à 4°, de préférence de 3° avec l'orientation de base de l'au moins un élément de ressort (9) en cas de charnière verrouillée.

16. Charnière à ressort selon l'une quelconque des revendications précédentes, **caractérisée en ce que** le corps de blocage (11) flotte librement entre les bras de l'élément de charnière (7).

17. Charnière à ressort selon l'une quelconque des revendications précédentes, **caractérisée en ce que** le corps de blocage (11) présente un nez en forme d'arc de cercle (13).

18. Charnière à ressort selon l'une quelconque des revendications précédentes, **caractérisée en ce que** le corps de blocage (11) peut être fabriqué dans un procédé de moulage par injection de poudre métallique.

19. Charnière à ressort selon l'une quelconque des revendications précédentes, **caractérisée en ce que** l'élément de charnière (7), l'au moins un élément de ressort (9) et le corps de blocage (11) forment un module pouvant être monté au préalable.

20. Charnière à ressort selon l'une quelconque des revendications précédentes, **caractérisée en ce que** l'au moins un élément de ressort (9) est soudé, brasé ou collé à l'élément de charnière (7).

21. Charnière à ressort selon la revendication 20, **caractérisée en ce que** l'au moins un élément de ressort (9) est soudé, brasé ou collé à l'au moins une saillie (21) de l'élément de charnière (7).
